# EUROPEAN PATENT APPLICATION

(11) **EP 3 184 959 A1**
(43) Date of publication of application: **28.06.2017**
(21) Application number: 16202993.8
(22) Date of filing: 08.12.2016
(51) Int. Cl.: G01B 11/24, F02K 9/36, F02K 9/34, F01D 21/12, F01D 21/00, G01L 1/22

(54) **COMPONENTS WITH STRAIN SENSORS AND THERMALLY REACTIVE FEATURES AND METHODS FOR MONITORING THE SAME**

(30) Priority: 10.12.2015 US 201514964824
(71) Applicant: General Electric Company, Schenectady, NY 12345 (US)
(72) Inventor: BOJAPPA, Parvangada Ganapathy, Greenville, SC South Carolina 29615 (US); BURNSIDE, Jason Lee, Greenville, SC South Carolina 29615 (US)
(74) Representative: Pöpper, Evamaria

(57) **Abstract**

Components (10) can comprise a substrate (11), a strain sensor (40) comprising at least two reference points (41,42) disposed on the substrate (11), and one or more thermally reactive features (50) disposed on the substrate (11) proximate the strain sensor (40), wherein the one or more thermally reactive features (50) react to one or more elevated temperatures.

## Description

### BACKGROUND OF THE INVENTION

The subject matter disclosed herein relates to strain sensors and, more specifically, to components with strain sensors and thermally reactive features and methods for monitoring the same.

Some components may need to operate in environments comprising elevated temperatures and/or corrosive conditions. For example, in gas turbine engines, such as aircraft engines for example, air is drawn into the front of the engine, compressed by a shaft-mounted rotary-type compressor, and mixed with fuel. The mixture is burned, and the hot exhaust gases are passed through a turbine mounted on a shaft. The flow of gas turns the turbine, which turns the shaft and drives the compressor and fan. The hot exhaust gases flow from the back of the engine, driving it and the aircraft forward.

During operation of gas turbine engines, the temperatures of combustion gases may exceed 3,000°F, considerably higher than the melting temperatures of the metal parts of the engine which are in contact with these gases. Operation of these engines at gas temperatures that are above the metal part melting temperatures may depend in part one or more protective coatings and/or on supplying a cooling air to the outer surfaces of the metal parts through various methods. The metal parts of these engines that are particularly subject to high temperatures, and thus require particular attention with respect to cooling, are the metal parts forming combustors and parts located aft of the combustor.

Moreover, these and other components may experience stress and/or strain from various forces over its operational lifecycle experiences fluctuations in operating temperatures. While various tools may be utilized to measure imparted stress and strain in relatively standard environments, turbine and other components in may experience working conditions with temperature fluctuations that may impact one or more component properties.

Accordingly, alternative components with strain sensors and thermally reactive features and methods for monitoring the same would be welcome in the art.

### BRIEF DESCRIPTION OF THE INVENTION

In one embodiment, a component is disclosed. The component can a substrate, a strain sensor comprising at least two reference points disposed on the substrate, and one or more thermally reactive features disposed on the substrate proximate the strain sensor, wherein the one or more thermally reactive features react to one or more elevated temperatures.

In another embodiment, another component is disclosed. The component can comprise a substrate, and a strain sensor comprising at least two reference points disposed on the substrate, wherein the strain sensor comprises a thermally reactive feature that reacts to one or more elevated temperatures.

In yet another embodiment, a method for monitoring a component is disclosed. The method includes measuring a second distance between at least two reference points of a strain sensor on the component at a second time interval, comparing the second distance between the at least two reference points of the strain sensor to a first distance between the at least two reference points of the strain sensor from a first time interval to determine a strain between the first time interval and the second time interval, determining an exposed elevated temperature between the first time interval and the second time interval based on a reaction of one or more thermally reactive features disposed on the component proximate the strain sensor, and referencing the exposed elevated temperature to the strain.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is an exemplary component comprising a strain sensor and thermally reactive features according to one or more embodiments shown or described herein;
FIG. 2 is an exemplary strain sensor according to one or more embodiments shown or described herein;
FIG. 3 is a top view of an exemplary component with a strain sensor and thermally reactive features according to one or more embodiments shown or described herein;
FIG. 4 is a top view of another exemplary component with a strain sensor and thermally reactive features according to one or more embodiments shown or described herein;
FIG. 5 is a top view of an exemplary component with a strain sensor and thermally reactive features at both a first time interval and a second time interval according to one or more embodiments shown or described herein; and,
FIG. 6 is an exemplary method for monitoring a strain sensor on a component with thermally reactive features according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

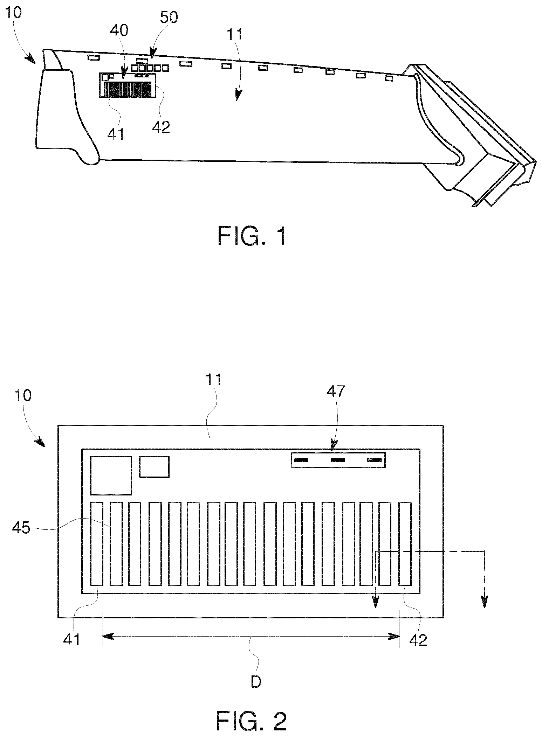

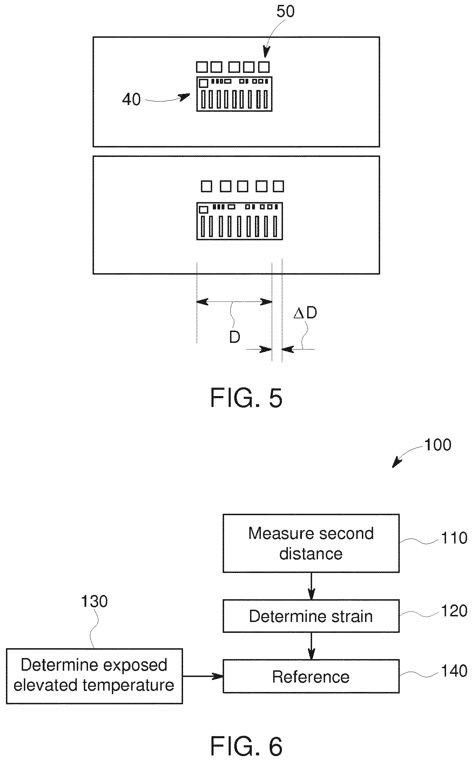

Referring now to FIG. 1, a component 10 generally comprises a substrate 11, a strain sensor 40 comprising at least two reference points 41 and 42 disposed on the substrate 11, and one or more thermally reactive features 50 disposed on the substrate proximate the strain sensor 40, wherein the one or more thermally reactive features 50 react at one or more elevated temperatures. The thermally reactive features 50 may thereby provide an indication of the relative temperature(s) experienced by the proximate strain sensor 40 so that the temperature information may be utilized along with changes in distance between the reference points 41 and 42 (as illustrated in FIG. 5) to better understand potential strain, strain rate, creep, fatigue, stress, etc. experienced by the component 10.

The component 10 (and more specifically the substrate 11 of the overall component 10) can comprise a variety of types of components used in a variety of different applications, such as, for example, components utilized in high temperature applications (e.g., components comprising nickel or cobalt based superalloys). In some embodiments, the component 10 may comprise an industrial gas turbine or steam turbine component such as a combustion component or hot gas path component. In some embodiments, the component 10 may comprise a turbine blade, compressor blade, vane, nozzle, shroud, rotor, transition piece or casing. In other embodiments, the component 10 may comprise any other component of a turbine such as any other component for a gas turbine, steam turbine or the like. In some embodiments, the component may comprise a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications).

Referring now to FIGS. 1-5, the strain sensor 40 is deposited on a portion of the exterior surface of the component 10. The strain sensor 40 generally comprises at least two reference points 41 and 42 that can be used to measure the distance D between said at least two reference points 41 and 42 at a plurality of time intervals. As should be appreciated to those skilled in the art, these measurements can help determine the amount of strain, strain rate, creep, fatigue, stress, etc. at that region of the component 10. The at least two reference points 41 and 42 can be disposed at a variety of distances and in a variety of locations depending on the specific component 10 so long as the distance D there between can be measured. The at least two reference points 41 and 42 may comprise dots, lines, circles, boxes or any other geometrical or non-geometrical shape so long as they are consistently identifiable and may be used to measure the distance D there between. Moreover, the strain sensor 40 may comprise an exterior edge and, depending on the configuration of the strain sensor 40, potentially one or more interior edges.

As best illustrated in FIGS. 1-5, the strain sensor 40 may comprise a variety of different configurations and cross-sections such as by incorporating a variety of differently shaped, sized, and positioned reference points 41 and 42. For example, as illustrated in FIG. 2, the strain sensor 40 may comprise a variety of different reference points comprising various shapes and sizes. Such embodiments may provide for a greater variety of distance measurements D such as between the outer most reference points (as illustrated), between two internal reference points, or any combination there between. The greater variety may further provide a more robust strain analysis on a particular portion of the component 10 by providing strain measurements across a greater variety of locations.

Furthermore, the dimensions of the strain sensor 40 may depend on, for example, the component 10, the location of the strain sensor 40, the targeted precision of the measurement, deposition technique, and optical measurement technique. For example, in some embodiments, the strain sensor 40 may comprise a length and width ranging from less than 1 millimeter to greater than 300 millimeters. Moreover, the strain sensor 40 may comprise any thickness that is suitable for deposition and subsequent optical identification without significantly impacting the performance of the underlying component 10. For example, in some embodiments, the strain sensor 40 may comprise a thickness of less than from about .1 millimeters to greater than 1 millimeter. In some embodiments, the strain sensor 40 may have a substantially uniform thickness. Such embodiments may help facilitate more accurate measurements for subsequent strain calculations between the first and second reference points 41 and 42.

In some embodiments, the strain sensor 40 may comprise any configurations such as a positively deposited square or rectangle wherein the first and second reference points 41 and 42 comprise two opposing sides of said square or rectangle. In other embodiments, the strain sensor 40 may comprise at least two deposited reference points 41 and 42 separated by negative space 45 (i.e., an area in which ceramic material is not deposited). The negative space 45 may comprise, for example, an exposed portion 12 of the exterior surface of the component 10. Alternatively or additionally, the negative space 45 may comprise a coating that helps protect at least a portion of the substrate 11 and/or strain sensor 40.

As illustrated in FIG. 2, in even some embodiments, the strain sensor 40 may be deposited to form a unique identifier 47 (hereinafter "UID"). The UID 47 may comprise any type of barcode, label, tag, serial number, pattern or other identifying system that facilitates the identification of that particular strain sensor 40. In some embodiments, the UID 47 may additionally or alternatively comprise information about the component 10 (e.g., turbine component) or the system or machine that the component 10 is incorporated into (e.g., gas or steam turbine). The UID 47 may thereby assist in the identification and tracking of particular strain sensors 40, components 10 or even overall systems or machines to help correlate measurements for past, present and future operational tracking.

In some embodiments, the component 10 may further comprise a coating 50 disposed on the substrate 11 adjacent the strain sensor 40. The coating may be disposed between the substrate 11 and the strain sensor 40 and potentially between the substrate 11 and the one or more thermally reactive features 50. The coating may thereby help protect the substrate 11 from the operating environment of the component 10 (e.g., elevated temperatures in an industrial gas turbine) and/or help ensure adhesion for the strain sensor 40 and/or one or more thermally reactive features 50.

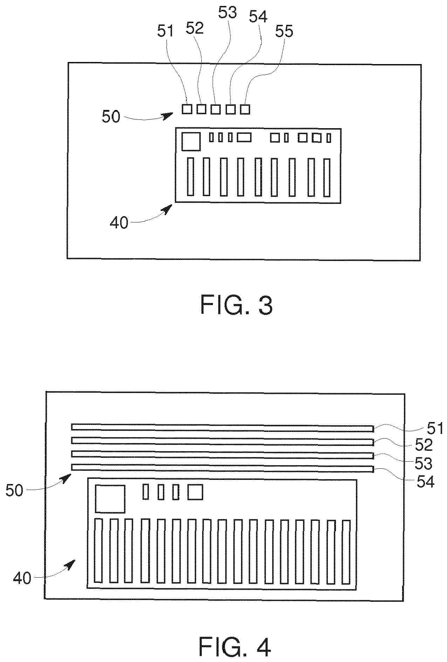

Referring now to FIGS. 3-5, the component 10 can also comprise one or more thermally reactive features 50 disposed proximate the strain sensor 40. The one or more thermally reactive features 50 can comprise any material and/or feature that react to one or more elevated temperatures. As used herein, react can refer to any identifiable change in one or more properties of the one or more thermally reactive features 50 such as, for example, by changing colors or vanishing from the component 10 (e.g., burning, melting or eroding away) at a single temperature or over a range of temperatures. Furthermore, as used herein, proximate can refer to any distance suitable for indicating that the strain sensor 40 experienced substantially the same temperature as the one or more thermally reactive features 50. For example, proximate can include the one or more thermally reactive features 50 being on top of the strain sensor 40, the one or more thermally reactive features 50 being directly adjacent (i.e., touching) the strain sensor 40, or the one or more thermally reactive features 50 being suitably close to the strain sensor 40 (e.g., within a few millimeters or centimeters) to negate any substantial temperature drop off between the two locations.

The component 10 can comprise any number of the one or more thermally reactive features 50. For example, the component 10 may comprise a single thermally reactive feature 50. The single thermally reactive feature 50 may react to a single temperature (e.g., changing colors or vanishing at a single temperature), or may gradually react over a range of temperatures (e.g., transition between two or more colors over a range of temperatures).

In some embodiments, the component 10 may comprise a first thermally reactive feature 51 that reacts at a first elevated temperature and a second reactive feature 52 that reacts to a second elevated temperature higher than the first elevated temperature. The component 10 may further comprise a third thermally reactive feature 53, fourth thermally reactive feature 54, fifth thermally reactive feature 55 and so on that react to third, fourth and fifth elevated temperatures respectively. In such embodiments, the thermally reactive features 50 may individually react to elevated temperatures spaced apart at certain intervals. Then, based on the thermally reactive features 50 did and did not react, one may be able to deduce the highest temperature that the strain sensor 40 was exposed to.

As exemplified in FIGS. 3-5, the one or more thermally reactive features 50 may comprise a variety of configurations and locations with respect to the strain sensor 40. For example, the one or more thermally reactive features 50 may comprise a variety of different shapes such as dots, square, lines, boxes or any other geometrical or non-geometrical shape. Each of the one or more thermally reactive features 50 may comprise the same shape, or the one or more thermally reactive features 50 may independently comprise a variety of different shapes.

In some embodiments, the one or more thermally reactive features 50 may comprise a plurality of thermally reactive features 50 separated from one another. For example, the one or more thermally reactive features 50 may be equally spaced along one or more sides of the strain sensor 40. In some embodiments, such as that illustrated in FIG. 4, the one or more thermally reactive features 50 may extend for at least an entire distance D between the at least two reference points 41 and 42 of the strain sensor 40. Such embodiments may ensure that at least a portion of the one or more thermally reactive features 50 experience the same temperature as the component 10 between the at least two reference points 41 and 42.

In some embodiments, the one or more thermally reactive features 50 may be disposed on top of the strain sensor 40 or be integrated with the strain sensor 40. For example, the one or more thermally reactive features 50 may be disposed on top of a printed strain sensor 40.

Alternatively or additionally, the strain sensor 40 may comprise the thermally reactive feature 50 such as when the strain sensor 40 comprises a material that reacts to one or more elevated temperatures (e.g., changes colors). For example, the component 10 may comprise a substrate 11 and a strain sensor 40 comprising at least two reference points 41 and 42 disposed on the substrate 11, wherein the strain sensor 40 comprises the thermally reactive feature 50 that reacts to one or more elevated temperatures.

As discussed above, in some embodiments, the component 10 may comprise one or more coatings. For example, one or more coatings may be disposed between the substrate 11 and the strain sensor 40 and/or the thermally reactive features 50. In such embodiments, the coating may help ensure the integrity of the strain sensor 40 and/or thermally reactive features 50 during operation of the component 10.

The one or more thermally reactive features 50 may comprise any suitable material or materials that react to one or more elevated temperatures. In some embodiments, the one or more thermally reactive features 50 may comprise a thermally reactive ink or paint. For example, the one or more thermally reactive features 50 may comprise one or more commercially available thermochromic pigments that react at different temperatures. In some embodiments, the one or more thermally reactive features 50 may comprise one or more materials that burn, melt, ignite or otherwise vanish from the component 10 at one or more elevated temperatures.

The strain sensor 40 and one or more thermally reactive features 50 may be deposited in one or more of a variety of locations on the substrate 11. For example, if the substrate comprises a turbine component, the strain sensor 40 and one or more thermally reactive features 50 may be deposited on a turbine blade, compressor blade, vane, nozzle, shroud, rotor, transition piece or casing. In such embodiments, the strain sensor 40 and one or more thermally reactive features 50 may be deposited in one or more locations known to experience various forces during unit operation such as on or proximate airfoils, platforms, tips or any other suitable location. Moreover, since the strain sensor 40 is proximate the one or more thermally reactive features 50, the strain sensor 40 may be deposited on a hot gas path or combustion turbine component such that the one or more thermally reactive features 50 may help identify peak experienced operating temperatures.

In even some embodiments, multiple strain sensors 40 and one or more thermally reactive features 50 may be deposited on a single turbine component or on multiple turbine components. For example, a plurality of strain sensors 40 may be deposited on a single turbine component (e.g., a turbine blade) at various locations such that the strain may be determined at a greater number of locations about the individual turbine component. Alternatively or additionally, a plurality of like turbine components (e.g., a plurality of turbine blades), may each have a strain sensor 40 and one or more thermally reactive features 50 deposited in a standard location so that the amount of strain experienced by each specific turbine component may be compared to other like turbine components. In even some embodiments, multiple different turbine components of the same turbine unit (e.g., turbine blades and vanes for the same turbine) may each have a strain sensor 40 and one or more thermally reactive features 50 deposited thereon so that the amount of strain experienced at different locations within the overall turbine may be determined.

Referring additionally to FIG. 6, a method 100 is illustrated for monitoring a component 10. The method 100 can comprise in step 110 measuring a second distance between at least two reference points 41 and 42 of a strain sensor 40 on the component 10 at a second time interval. The method 100 can further comprise in step 120 comparing the second distance between the at least two reference points 41 and 42 of the strain sensor 40 (that was measured in step 110) to a first distance between the at least two reference points 41 and 42 of the strain sensor 40 from a first time interval to determine a strain between the first time interval and the second time interval. The first time interval may comprise an earlier point in time such as before the component was utilized in operation (e.g., installed on a turbine). Furthermore, the first distance may have been measured or otherwise known based on, for example, manufacturing parameters.

Still referring to FIG. 6, the method 100 can further comprise in step 130 determining an exposed elevated temperature between the first time interval and the second time interval based on a reaction of one or more thermally reactive features 50 disposed on the component 10 proximate the strain sensor 40. As discussed above, the exposed elevated temperature can refer to the highest temperature the component 10 was exposed to between the first time interval and the second time interval. Moreover, the reaction of the one or more thermally reactive features 50 indicating the exposed elevated temperature may comprise any suitable mechanism such, for example, changing color or disappearing.

Finally, method 100 can comprise in step 140 referencing the exposed elevated temperature determined in step 130 with the strain determined in step 120. The reference in step 140 may help verify the integrity of the component 10, identify any extreme occurrences or deviations from standard operating conditions, and/or otherwise be used to diagnose or determine the future utility of the component 10.

It should now be appreciated that strain sensors and one or more thermally reactive features may be disposed on substrates to form overall components that can be monitored for strain, creep or the like. The one or more thermally reactive features may also enable the understanding of the exposed elevated temperatures experienced by the strain sensor 40 to help study, diagnose, and/or validate the overall component.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following clauses:
1. A component comprising:
   a substrate;
   a strain sensor comprising at least two reference points disposed on the substrate; and,
   one or more thermally reactive features disposed on the substrate proximate the strain sensor, wherein the one or more thermally reactive features react to one or more elevated temperatures.
2. The component of clause 1, wherein the one or more thermally reactive features comprise a first thermally reactive feature that reacts to a first elevated temperature and a second thermally reactive feature that reacts to a second elevated temperature higher than the first elevated temperature.
3. The component of clause 2, wherein the one or more thermally reactive features further comprise a third thermally reactive feature that reacts to a third elevated temperature higher than the second elevated temperature.
4. The component of clause 1, wherein the one or more thermally reactive features react to the one or more elevated temperatures by changing colors.
5. The component of clause 1, wherein the one or more thermally reactive features react to the one or more elevated temperatures by vanishing from the component.
6. The component of clause 1, further comprising a coating disposed between the substrate and the strain sensor.
7. The component of clause 6, wherein the coating is also disposed between the substrate and the one or more thermally reactive features.
8. The component of clause 1, wherein the one or more thermally reactive features comprise a plurality of thermally reactive features separated from one another.
9. The component of clause 1, wherein the one or more thermally reactive features extend for at least an entire distance between the at least two reference points of the strain sensor.
10. The component of clause 1, wherein at least one of the one or more thermally reactive features are disposed on top of the strain sensor.
11. The component of clause 1, wherein at least one of the one or more thermally reactive features comprises one or more thermochromics pigments.
12. The component of clause 1, wherein the substrate comprises a turbine component.
13. A component comprising
   a substrate; and,
   a strain sensor comprising at least two reference points disposed on the substrate, wherein the strain sensor comprises a thermally reactive feature that reacts to one or more elevated temperatures.
14. The component of clause 13, wherein the strain sensor comprising the thermally reactive feature reacts to the one or more elevated temperatures by changing colors.
15. The component of clause 14, wherein at least one of the thermally reactive feature comprises one or more thermochromics pigments.
16. The component of clause 13, further comprising a coating disposed between the substrate and the strain sensor.
17. The component of clause 13, wherein the strain sensor comprises a plurality of thermally reactive features that react to a plurality of elevated temperatures.
18. The component of clause 13, wherein the substrate comprises a turbine component.
19. A method for monitoring a component, the method comprising:
   measuring a second distance between at least two reference points of a strain sensor on the component at a second time interval;
   comparing the second distance between the at least two reference points of the strain sensor to a first distance between the at least two reference points of the strain sensor from a first time interval to determine a strain between the first time interval and the second time interval;
   determining an exposed elevated temperature between the first time interval and the second time interval based on a reaction of one or more thermally reactive features disposed on the component proximate the strain sensor; and
   referencing the exposed elevated temperature to the strain.
20. The method of clause 19, wherein the substrate comprises a turbine component.

## Claims

1. A component (10) comprising:
a substrate (11);
a strain sensor (40) comprising at least two reference points (41, 42) disposed on the substrate (11); and,
one or more thermally reactive features (50) disposed on the substrate (11) proximate the strain sensor (40), wherein the one or more thermally reactive features (50) react to one or more elevated temperatures.

2. The component (10) of claim 1, wherein the one or more thermally reactive features (50) comprise a first thermally reactive feature (51) that reacts to a first elevated temperature and a second thermally reactive feature (52) that reacts to a second elevated temperature higher than the first elevated temperature.

3. The component (10) of claim 2, wherein the one or more thermally reactive features further (50) comprise a third thermally reactive feature (53) that reacts to a third elevated temperature higher than the second elevated temperature.

4. The component (10) of claim 1, wherein the one or more thermally reactive features (50) react to the one or more elevated temperatures by changing colors.

5. The component (10) of claim 1, wherein the one or more thermally reactive features (50) react to the one or more elevated temperatures by vanishing from the component (10).

6. The component (10) of any of claims 1 to 5, further comprising a coating disposed between the substrate (11) and the strain sensor (40).

7. The component (10) of claim 6, wherein the coating is also disposed between the substrate (11) and the one or more thermally reactive features (50).

8. The component (10) of claim 1, wherein the one or more thermally reactive features (50) comprise a plurality of thermally reactive features (50) separated from one another.

9. The component (10) of claim 1, wherein the one or more thermally reactive features (50) extend for at least an entire distance (D) between the at least two reference points (41,42) of the strain sensor (40).

10. The component (10) of claim 1, wherein at least one of the one or more thermally reactive features (50) are disposed on top of the strain sensor (40).

11. The component (10) of claim 1, wherein at least one of the one or more thermally reactive features (50) comprises one or more thermochromics pigments.

12. The component (10) of claim 1, wherein the substrate comprises a turbine component.

13. A component (10) comprising
a substrate (11); and,
a strain sensor (40) comprising at least two reference points (41,42) disposed on the substrate (11), wherein the strain sensor(40) comprises a thermally reactive feature (50) that reacts to one or more elevated temperatures.

14. A method (100) for monitoring a component (10), the method comprising:
measuring a second distance (110) between at least two reference points (41,42) of a strain sensor (40) on the component (10) at a second time interval;
comparing the second distance between the at least two reference points (41,42) of the strain sensor (40) to a first distance between the at least two reference points (41,42) of the strain sensor (40) from a first time interval to determine a strain (120) between the first time interval and the second time interval;
determining an exposed elevated temperature (130) between the first time interval and the second time interval based on a reaction of one or more thermally reactive features (50) disposed on the component (10) proximate the strain sensor (40); and
referencing (140) the exposed elevated temperature to the strain.

15. The method (100) of claim 14, wherein the substrate (11) comprises a turbine component.
